# EUROPÄISCHE PATENTSCHRIFT

(11) **EP 1 658 668 B1**
(45) Veröffentlichungstag und Bekanntmachung des Hinweises auf die Patenterteilung: **17.12.2008**
(21) Anmeldenummer: 04763116.3
(22) Anmeldetag: 07.07.2004
(51) Int. Cl.: H02J 5/00

(54) **ANORDNUNG ZUR BERÜHRUNGSLOSEN INDUKTIVEN ÜBERTRAGUNG ELEKTRISCHER LEISTUNG**
ARRANGEMENT FOR CONTACTLESS, INDUCTIVE TRANSMISSION OF ELECTRIC POWER
ENSEMBLE POUR LE TRANSFERT INDUCTIF SANS CONTACT D'UNE PUISSANCE ELECTRIQUE

(30) Priorität: 20.08.2003 DE 10338852
(43) Veröffentlichungstag der Anmeldung: 24.05.2006
(73) Patentinhaber: Sew-Eurodrive GmbH & Co. KG, 76646 Bruchsal (DE)
(72) Erfinder: UHL, Thomas, 76646 Bruchsal (DE)
(86) Internationale Anmeldenummer: PCT/EP2004/007419
(87) Internationale Veröffentlichungsnummer: WO 2005/020405

(56) Entgegenhaltungen:
- EP-A- 0 818 868
- DE-U- 29 580 171
- US-A- 5 855 261
- US-A- 6 005 304
- US-A1- 2003 146 062

## Beschreibung

Die Erfindung betrifft eine Anordnung zur berührungslosen induktiven Übertragung elektrischer Leistung.

Aus der DE 44 46 779 C2 ist eine Anordnung zur berührungslosen induktiven Übertragung elektrischer Leistung bekannt. Dabei ist ein Mittelleiter etwa im Zentrum eines Außenleiters angeordnet und von diesem, als fast geschlossenes Gehäuse ausgebildeten Außenleiter teilweise umgeben. Im Außenleiter fließt ein gleichgroßer Strom wie im Mittelleiter, der jedoch entgegengerichtet ist. Der Mittelleiter ist umfasst von einem U-förmig ausgebildeten Ferritkern, der eine Sekundärwicklung trägt und elektromagnetisch , insbesondere magnetisch, an den Primärkreis, umfassend zumindest Mittelleiter und Außenleiter, gekoppelt ist. Nachteilig ist bei dieser Anordnung, dass bei langen Strecken, beispielsweise mehrere Hundert Meter, zur Herstellung des Außenleiter viel Material notwendig ist. Dies führt zu hohen Kosten. Des Weiteren führt der Außenleiter Strom und muss daher aus sicherheitstechnischen Gründen elektrisch isoliert werden. Die Isolierung eines solchen Außenleiters ist aber mit sehr hohen Kosten verbunden.

Aus der US 5 855 261 A1 ist eine Anordnung zur berührungslosen Energieübertragung mit einem E-förmigen Kern bekannt.

Aus der US 6 005 304 ist eine Anordnung zur berührungslosen Energieübertragung mlt einem U-förmigen Kern bekannt.

Aus der DE 295 80 171 U ist eine Anordnung zur berührungslosen Energieübertragung mit einem E-förmlgen Kern bekannt, die in der Robotertechnik elnsetzbar ist.

Aus der EP 0 818 868 A1 ist eine Anordnung zur berührungslosen Energieübertragung mit einem E-förmigen Kern bekannt, wobei ein Abschalten der Induktiven Kopplung ausführbar ist.

Aus der US 20031146062 A1 ist eine Anordnung zur berührungslosen Energieübertragung mit einem U-förmigen Kern bekannt, wobei der Mittelleiter auf einem T-Träger befestigt ist.

Der Erfindung liegt daher die Aufgabe zugrunde, bei einer solchen Anordnung zur berührungslosen induktiven Übertragung elektrischer Leistung diese derart weiterzubilden, dass eine erhöhte Sicherheit bei geringen oder geringeren Kosten erreichbar ist.

Erfindungsgemäß wird die Aufgabe bei der Anordnung zur berührungslosen induktiven Übertragung elektrischer Leistung nach den in Anspruch 1 angegebenen Merkmalen gelöst.

Wichtige Merkmale der Erfindung bei der Anordnung sind, dass die Anordnung zur berührungslosen induktiven Übertragung elektrischer Leistung auf einen bewegbaren Verbraucher
mit einem als langgestreckte Leiteranordnung, insbesondere linear oder gekrümmt, ausgebildeten Primärkreis, der an eine Wechselspannungsquelle oder Wechselstromquelle angeschlossen ist
und einem am relativ zum Primärkreis bewegbaren Verbraucher angebrachten Übertragerkopf, der einen Kern und eine diesen Kern umfassende Sekundärwicklung umfasst, welche mit dem Primärkreis elektromagnetisch, insbesondere magnetisch, gekoppelt ist,
wobei die Leiteranordnung des Primärkreises einen Mittelleiter umfasst, der von einem U-förmigen Kern umfasst wird, der die Sekundärwicklung zur Versorgung des Verbrauchers trägt,
und dass die Leiteranordnung im Primärkreis einen Rückleiter umfasst, in welchem ein gleichgroßer, entgegengesetzt gerichteter Strom, wie im Mittelleiter fließt,
wobei zumindest eine Abschirmung vorgesehen ist,
wobei zumindest eine Abschirmung zwischen Mittelleiter und Rückleiter angeordnet ist.

Von Vorteil ist dabei, dass die Abschirmung Wirbelströme aufnimmt und daher magnetische Felder abschirmt, wobei nur äußerst geringe ohmsche Verluste entstehen. Somit ist als Rückleiter ein marktübliches kostengünstiges Kabel verwendbar, das für die sicherheitstechnischen Anforderungen isoliert ausführbar ist. Der Mittelleiter hingegen ist aus einem marktoblichen kostengünstigen Kabel oder Litze herstellbar, die aus vielen einzelnen isolierten Leitungen besteht und an der eine zusätzliche Isolierung vorsehbar ist. Die Abschirmung selbst benötigt keine Isolierung.

Die Abschirmung ist U-förmig ausgebildet und bildet ein fast geschlossenes Gehäuse um den Mittelleiter herum, wobei eine Ausnehmung für den bewegbaren Kern vorgesehen ist. Von Vorteil ist dabei, dass die induktive Kopplung verbesserbar ist und für den Rückleiter keine Litze notwendig ist.

Bei **einem anderen technischen Beispiel** ist eine Abschirmung plattenförmig ausgeführt, insbesondere in Schnittansicht ist die Verbindungslinie von Mittelleiter und Rückleiter die Normalenrichtung der Platte. Von Vorteil ist dabei, dass eine Abschirmung des Magnetfeldes verbessert ist und die induktive Kopplung der Anordnung auch. Somit ist auch der Wirkungsgrad erhöht.

Bei einer anderen vorteilhaften Ausgestaltung ist eine weitere Abschirmung mit dem Kern verbunden und ist mit diesem mitbewegbar und umgibt diesen zumindest teilweise an seinem äußeren Umfang. Von Vorteil ist dabei, dass der Wirkungsgrad in kostengünstiger Weise verbesserbar ist, da die Vorrichtung mit weniger Aluminium realisierbar wird.

Bei **einem anderen technischen Beispiel** ist der Rückleiter aus einem einfachen, marktüblichen isolierten Kabel ausgeführt. Von Vorteil ist dabei, dass die Anordnung kostengünstig ausführbar ist.

Bei einer vorteilhaften Ausgestaltung ist der Mittelleiter aus Litze ausgeführt. Von Vorteil ist dabei, dass die ohmschen Verluste reduzierbar und der Wirkungsgrad verbesserbar ist.

Bei einer vorteilhaften Ausgestaltung sind Mittelleiter und Rückleiter isoliert ausgeführt. Von Vorteil ist dabei, dass die Sicherheit verbesserbar ist.

Bei **einem anderen technischen Beispiel** weist die Abschirmung keine Isoüerung auf. Von Vorteil ist dabei, dass die Anordnung kostengünstig realisierbar ist.

Bei **einem anderen technischen Beispiel** besteht zumindest eine der Abschirmungen aus Aluminium. Von Vorteil ist dabei, dass die ohmschen Verluste und die damit verbundene Wärmeentwicklung reduzierbar sind.

Der Kern besteht aus einem magnetisch leitfähigerem Material als Luft. Insbesondere ist er als Ferritkern ausführbar. Von Vorteil ist dabei, dass ein kostengünstiges Standardmaterial verwendbar ist, das eine größere magnetische Permeabilität als Luft aufweist und kleinere Ummagnetisierungsverluste aufweist.

Weitere Vorteile ergeben sich aus den Unteransprüchen.

Unter marktüblichem Kabel sind auch Kabel zu verstehen, die bei niederfrequenten Versorgungsnetzen in Industrie oder Haushalt eingesetzt werden, beispielsweise bei 50 Hz oder 60 Hz.

### Bezugszeichenliste

- 1: Mittelleiter
- 2: Verbraucher
- 3: Ferritkern
- 4: Sekundärwicklung
- 5: Rückleiter
- 6: Wechselstromquelle
- 21: Rückleiter
- 31: Abschirmung
- 32: Rückleiter
- 41: Abschirmung
- 42: Rückleiter
- 43: Abschirmung

**Die Abbildungen werden nun näher erläutert:**

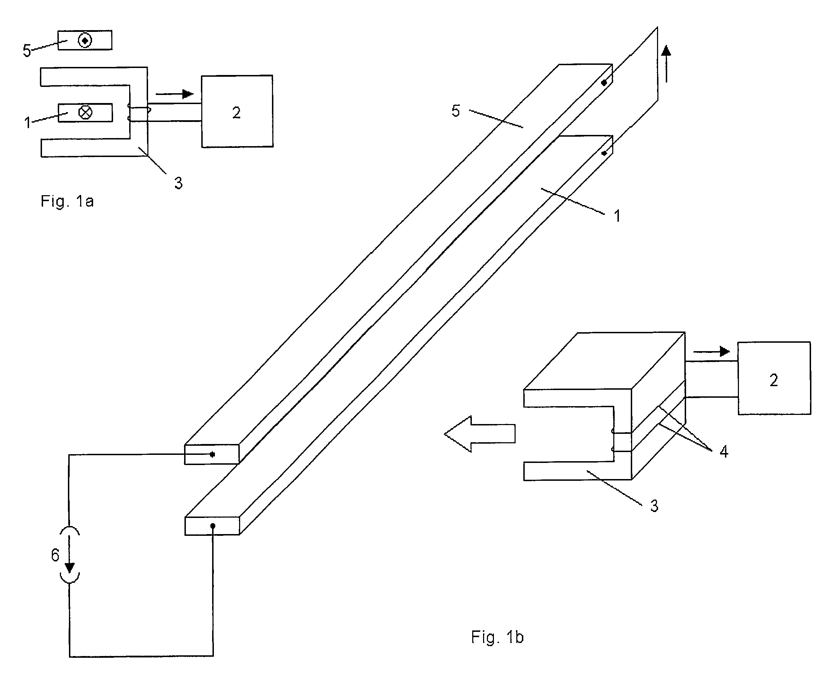

In der Figur 1b, 2b, 3b und 4b sind Anordnungen zur berührungslosen induktiven Übertragung elektrischer Leistung in Schrägansicht schematisch gezeichnet.

In der Figur 1a, 2a, 3a und 4a sind Anordnungen zur berührungslosen induktiven Übertragung elektrischer Leistung in zugehöriger Schnittansicht schematisch gezeichnet, wobei die Stromrichtung gekennzeichnet ist.

Die Figur 1 a und 1 b zeigt eine Wechselstromquelle 6, die mit einem Mittelleiter 1 elektrisch verbunden ist zur Einspeisung eines mittelfrequenten Wechselstroms. Die Rückleitung dieses Stromes erfolgt über den Rückleiter 5, der ebenfalls mit der Wechselstromquelle 6 elektrisch verbunden ist.

Über den Mittelleiter 1 wird ein U-förmiger Ferritkern 3 mit Sekundärwicklung 4 aufgesetzt, wobei die Sekundärwicklung 4 einen Verbraucher 2 versorgt. Der Verbraucher 2 und der Ferritkern 3 sind zusammen gegen den Mittelleiter relativ bewegbar angeordnet. Der Verbraucher ist beispielsweise auch mit einem Elektromotor verbindbar, der als Antrieb die Relativbewegung erzeugt.

Der Rückleiter 5 und der Mittelleiter 1 sind in kostengünstiger Weise elektrisch isolierbar. Jedoch muss für beide Litze verwendet werden, da keine Abschirmung vorhanden ist. Die Litze besteht aus einer Vielzahl von einzeln isolierten Leitungen. Mit einer solchen Litze sind die ohmschen Verluste reduzierbar, insbesondere diejenigen, die von induzierten Wirbelströmen stammen. Weil jedoch eine Abschirmung fehlt, ist die induktive Kopplung nicht sehr gut, der Wirkungsgrad insgesamt nicht sehr gut und die Anordnung ist kostspielig, insbesondere wegen der Kosten für die Litze.

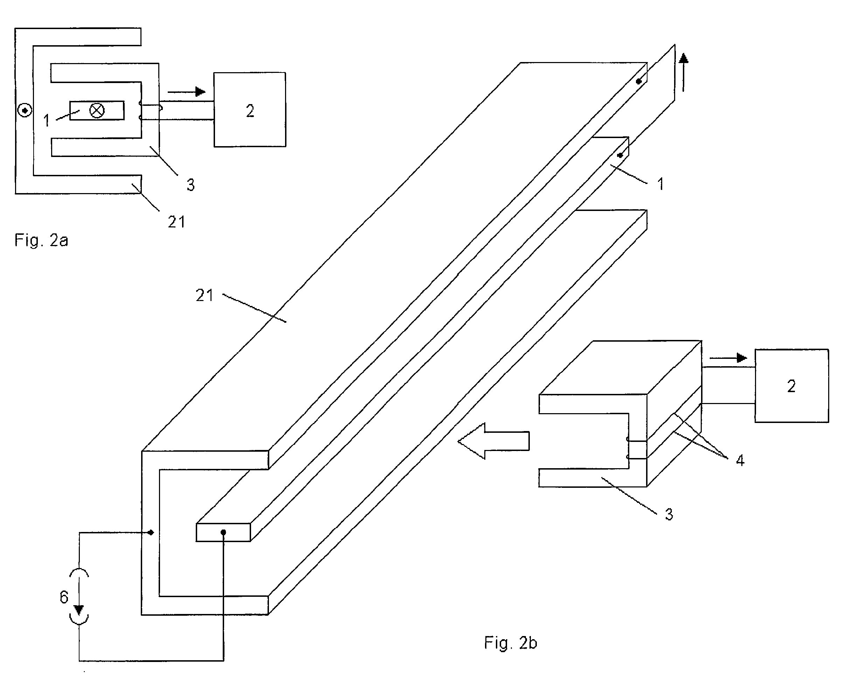

In Figur 2a und 2b ist eine weitere Anordnung gezeigt, bei der der Mittelleiter aus Litze gefertigt ist. Der Rückleiter 21 jedoch ist aus Aluminium gefertigt und weist abschirmende Wirkung auf. Er umschließt den Mittelleiter fast, weist aber nach oben hin eine Ausnehmung auf für den Ferritkern 3. Die mechanische Befestigung des Mittelleiters 1 ist nicht gezeigt. Sie kann mittels Kunststoffteilen und/oder mittels Ferritmaterial erfolgen, beispielsweise analog zur DE 44 46 779 C2, wo eine Stütze mit eingesetzten Ferritkörpern verwendet ist, wodurch einerseits eine elektrische Isolierung des Mittelleiters zum Außenleiter und andererseits eine verbesserte Durchleitung des Magnetfeldes erreichbar ist.

Wegen der abschirmenden Wirkung des Rückleiters 21 für Magnetfelder ist die induktive Kopplung verbessert und der Wirkungsgrad verbesserbar. Der hohe Materialbedarf für den Rückleiter 21 ist jedoch kostspielig und die aus sicherheitstechnischen Anforderungen heraus notwendige Isolierung des Rückleiter 21 ist aufwendig und kostspielig.

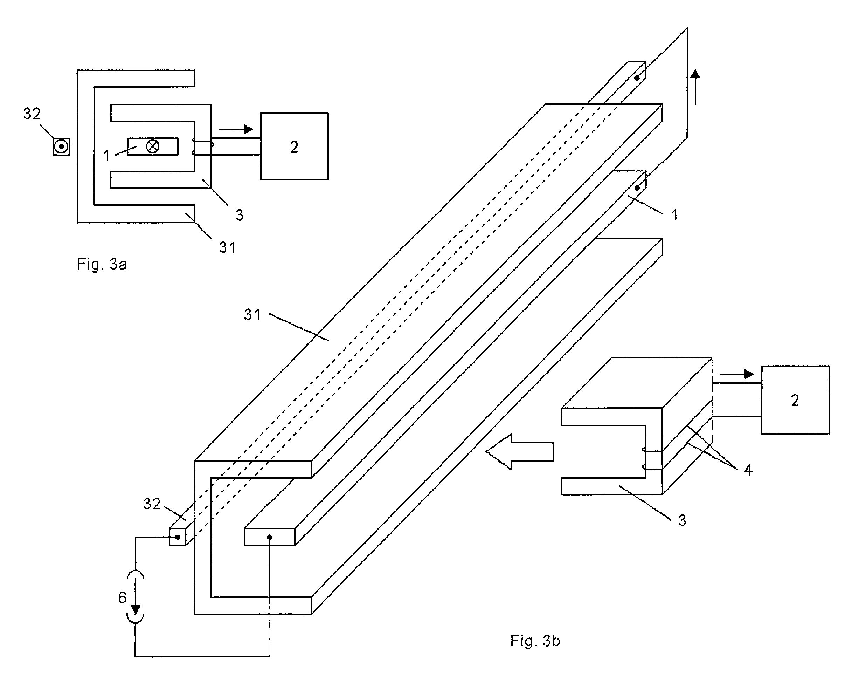

In der Figur 3a und 3b ist eine weiter verbesserte und erfindungsgemäße Ausführung schematisch gezeigt. Dort wird eine Abschirmung 31 vorgesehen, die jedoch keine Stromrückleitung ausführen muss. Diese Rückleitung des Stromes wird im Rückleiter 32 vorgesehen. Für diesen Rückleiter 32 ist keine Litze notwendig sondern es kann ein kostengünstiges einfaches, marktübliches isoliertes Kabel verwendet werden. Wegen der für Magnetfelder wirksamen Abschirmung 31 ist die induktive Kopplung verbessert und der Wirkungsgrad weiter verbessert. Aus sicherheitstechnischen Anforderungen heraus ist keine Isolierung der Abschirmung 31 notwendig. Der Mittelleiter 1 muss jedoch als Litze ausgeführt werden. Insgesamt ist mit dem erfindungsgemäßen Ausführungsbeispiel eine sehr gute induktive Koppelung erreichbar. Außerdem ist der Rückleiter sehr kostengünstig ausführbar und die Abschirmung des Magnetfeldes ist sehr gut. Stromführende Teile sind in kostengünstiger Weise isoliert ausführbar. Weiter ist auch vorteilhaft, dass alte Anlagen, die mit einer Anordnung nach DE 44 46 779 C2 oder verwandten Systemen ausgeführt sind, schnell und einfach umrüstbar sind mit der erfindungsgemäßen Anordnung nach Figur 3a und 3b.

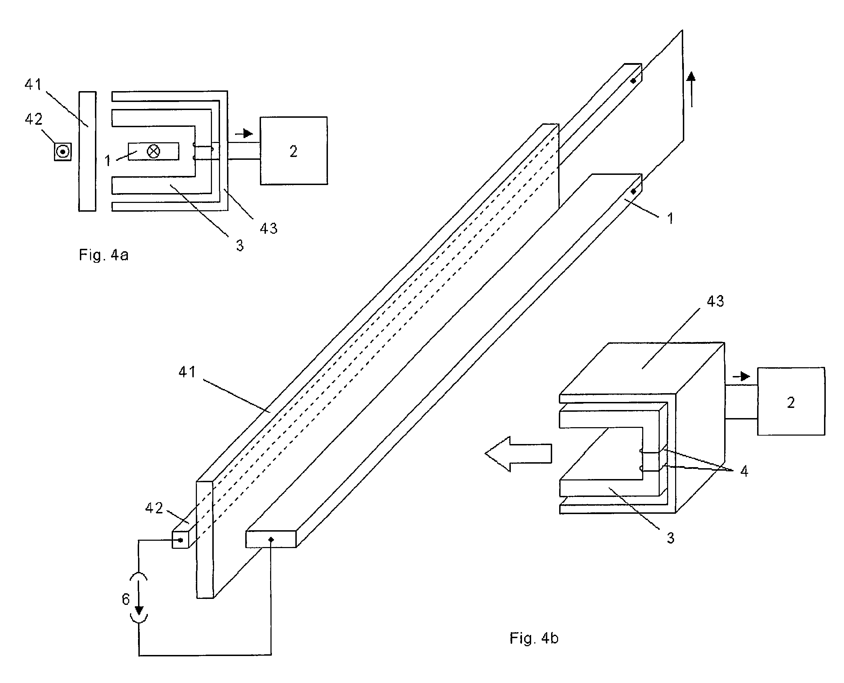

In der Figur 4a und 4b ist eine weiter verbesserte Ausführung schematisch gezeigt. Dort ist eine Abschirmung 41 dem Mittelleiter zugeordnet, die allerdings sehr viel weniger Material zu ihrer Herstellung benötigt. Sie ist als Platte ausgeführt, die zwischen dem Rückleiter 42, der als kostengünstiges einfaches, marktübliches isoliertes Kabel ausführbar ist, und dem Mittelleiter 1 angeordnet ist. Beispielsweise ist die Platte aus Aluminium ausführbar wie die alle in dieser Schrift erwähnten Abschirmungen. Darüber hinaus ist die Platte als Bodenteil verlegbar und das Kabel in den Boden einbringbar. Somit steht dann nur der Mittelleiter hervor.

Bei Anlagen mit Einschienenhängebahnen sind bereits in der Anlage Aluminiumplatten als Aufhängung vorhanden. Auch bei andersartigen Anlagen gibt es je nach Art der Anlage Aluminiumplatten. Diese sowieso bereits vorhandenen Platten sind als Abschirmung für die Vorrichtung nach Figur 4a und 4b verwendbar. Die Dicke der Platte ist nicht besonders wesentlich. Somit muss die jeweilige Anlage nicht geändert werden, um die Lösung nach Figur 4a und 4b an ihr einzusetzen.

Die Abschirmung 43 umgibt den Ferritkern 3 zumindest teilweise an seiner äußeren Umrandung. Somit ist der Ferritkern fast vollständig abgeschirmt mittels der mitbewegbaren verbundenen Abschirmung 43 und der mit dem Rückleiter 42 und Mittelleiter 1 verbundenen Abschirmung 41.

Insgesamt ist bei der Anordnung nach Figur 4a und 4b die induktive Kopplung verbessert und der Wirkungsgrad weiter verbessert. Aus sicherheitstechnischen Anforderungen heraus ist eine Isolierung des Rückleiters 21 und des Mittelleiters 1 notwendig. Der Mittelleiter 1 muss jedoch als Litze ausgeführt werden. Beim Rückleiter 42 ist die Isolierung sehr kostengünstig vorsehbar mittels Verwendung des marktüblichen einfachen isolierten Kabels. Beim Mittelleiter 1 sind die Einzelleitungen der Litze stets isoliert. Jedoch ist eine solche weitere Isolierung mittels einer Kunststoffummantelung kostengünstig realisierbar, wie bei allen in dieser Schrift erwähnten Litzen.

Der Primärkreis ist in den Figuren als langgestreckte Leiteranordnung dargestellt. Jedoch bezieht sich die Erfindung auch auf kurvig ausgeführte, beispielsweise kreisförmige, Leiteranordnungen. Die Bezeichnung ,langgestreckt' ist also auch auf gekrümmt verlaufende Leitungsanordnungen zu beziehen. Beispielsweise ist der Verbraucher auf einem drehbaren zylindrischen Tisch angeordnet, an dessen zylindrischem Außenumfang ein Ferritkern angeordnet ist, die einen an einem kreisförmig um den Tisch herum verlegten Mittelleiter umgeben.

## Patentansprüche

1. Anordnung zur berührungslosen induktiven Übertragung elektrischer Leistung auf einen bewegbaren Verbraucher
mit einem als langgestreckte Leiteranordnung, insbesondere linear oder gekrümmt, ausgebildeten Primärkreis, (1,21) der an eine Wechselspannungsquelle oder Wechselstromquelle (6) angeschlossen ist
und einem am relativ zum Primärkreis (1,21) bewegbaren Verbraucher (2) angebrachten Übertragerkopf, der einen U-förmigen Kern (3) aus Ferrit und eine diese U-förmigen Kern (3) umfassende Sekundärwicklung (4) umfasst, welche mit dem Primärkreis (1,21) elektromagnetisch, insbesondere magnetisch, gekoppelt ist,
wobei
die Leiteranordnung des Primärkreises einen Mittelleiter (1) umfasst, der von dem U-förmigen Kern (3) des Übertragerkopfes umfasst wird, der die Sekundärwicklung (4) zur Versorgung des Verbrauchers trägt,
und dass die Leiteranordnung im Primärkreis einen Rückleiter (21) mit U-förmigem Querschnitt umfasst, in welchem ein gleichgroßer, entgegengesetzt gerichteter Strom, wie im Mittelleiter (1) fließt,
wobei der Rückleiter (21) aus Aluminium gefertigt ist, so dass er abschirmende Wirkung aufweist,
wobei ein fast geschlossenes Gehäuse um den Mittelleiter herum gebildet ist, das eine Ausnehmung für den bewegbaren Kern aufweist.

2. Anordnung nach Anspruch 1,
**dadurch gekennzeichnet, dass**
eine weitere Abschirmung (43) mit dem Kern verbunden ist und mit diesem mitbewegbar ist und diesen zumindest teilweise an seinem äußeren Umfang umgibt.

3. Anordnung nach mindestens einem der vorangegangenen Ansprüche,
**dadurch gekennzeichnet, dass**
der Mittelleiter (1) aus Litze ausgeführt ist.

4. Anordnung nach mindestens einem der vorangegangenen Ansprüche,
**dadurch gekennzeichnet, dass**
Mittelleiter (1) und Rückleiter (21) isoliert ausgeführt sind.

## Claims

1. An arrangement for the contact-less, inductive transmission of electrical power to a movable consumer device,
with a primary circuit (1, 21) which is constructed in the form of an elongate conductor device, in particular linear or curved, and which is connected to an alternating-current voltage source or an alternating current source (6),
and a transformer head which is connected to the consumer device (2) movable relative to the primary circuit (1, 21) and which comprises a U-shaped core (3) of ferrite and a secondary winding (4) which surrounds the said U-shaped core (3) and which is coupled to the primary circuit (1, 21) in an electromagnetic, and in particular a magnetic, manner,
wherein
the conductor device of the primary circuit comprises a neutral conductor (1) which is embraced by the U-shaped core (3) of the transformer head which carries the secondary winding (4) for supplying the consumer device,
and the conductor device in the primary circuit comprises a return conductor (21) of U-shaped cross-section in which a current flows which is of the same magnitude, in the opposite direction, as in the neutral conductor (1),
wherein the return conductor (21) is produced from aluminium, so that it has a shielding action, and
wherein an almost closed casing is formed around the neutral conductor, the said casing having a recess for the movable core.

2. An arrangement according to Claim 1, **characterized in that** a further shield (43) is connected to the core and is jointly movable with it and surrounds it at least in part on its external periphery.

3. An arrangement according to at least one of the preceding Claims, **characterized in that** the neutral conductor (1) is produced from stranded wire.

4. An arrangement according to at least one of the preceding Claims, **characterized in that** the neutral conductor (1) and the return conductor (21) are insulated.

## Revendications

1. Agencement pour la transmission inductive sans contact d'une puissance électrique à un consommateur mobile
avec un circuit primaire (1, 21) réalisé sous la forme d'un agencement de conducteurs allongé, en particulier linéaire ou courbe, qui est raccordé à une source de tension alternative ou à une source de courant alternatif (6)
et avec une tête de transmission disposée sur le consommateur (2) mobile par rapport au circuit primaire (1, 21), qui comprend un noyau en forme de U (3) en ferrite et un enroulement secondaire (4) entourant ce noyau en forme de U (3), lequel est couplé électromagnétiquement, en particulier magnétiquement, au circuit primaire (1, 21),
l'agencement de conducteurs du circuit primaire comprenant un conducteur central (1) qui est entouré par le noyau en forme de U (3) qui porte l'enroulement secondaire (4) pour alimenter le consommateur,
et l'agencement de conducteurs dans le circuit primaire comprenant un conducteur de retour (21) à section en forme de U dans lequel circule un courant de même grandeur que dans le conducteur central (1) mais en sens opposé,
le conducteur de retour (21) étant réalisé en aluminium de manière à présenter un effet de blindage,
un boîtier presque fermé étant formé autour du conducteur central, qui présente un évidement pour le noyau mobile.

2. Agencement selon la revendication 1,
**caractérisé en ce**
**qu'**un autre blindage (43) est relié au noyau et déplaçable avec celui-ci en l'entourant au moins partiellement sur son pourtour extérieur.

3. Agencement selon au moins l'une des revendications précédentes,
**caractérisé en ce**
**que** le conducteur central (1) est réalisé en fil tressé.

4. Agencement selon au moins l'une des revendications précédentes,
**caractérisé en ce**
**que** le conducteur central (1) et le conducteur de retour (21) sont isolés.
